Europäisches Patentamt

European Patent Office

Office européen des brevets

(11) Publication number: **0 113 792**
**B1**

# EUROPEAN PATENT SPECIFICATION

(45) Date of publication of patent specification: **21.09.88**

(21) Application number: **83100332.2**

(22) Date of filing: **17.01.83**

(51) Int. Cl.⁴: **A 61 C 5/02**, A 61 C 13/30

(54) Atraumatic endodontic reconstruction system.

(43) Date of publication of application:
25.07.84 Bulletin 84/30

(45) Publication of the grant of the patent:
21.09.88 Bulletin 88/38

(84) Designated Contracting States:
AT CH DE FR GB IT LI SE

(56) References cited:
FR-A-2 385 383
GB-A- 917 633

(73) Proprietor: GEBR. BRASSLER GmbH & Co, KG.
Trophagener Weg 25 Postfach 160
D-4920 Lemgo (DE)

(72) Inventor: Lustig, Leopold Paul
304 Greenwood Street
Newton Center Massachusetts 02159 (US)
Inventor: Rosen, Alfred H.
3546 S. Ocean Blvd.
Palm Beach Florida 33480 (US)

(74) Representative: Modiano, Guido et al
MODIANO, JOSIF, PISANTY & STAUB Modiano
& Associati Via Meravigli, 16
I-20123 Milan (IT)

EP 0 113 792 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

In the setting of endodontic posts in root canals for support of reconstructions it is important to provide a sanitary environment for the preparation of root canals and following procedures, and equally important to prevent cracking or splitting of the root. This invention relates to a new endodontic reconstruction system which is both therapeutic and protective and atraumatic in use.

Recent years have been an amphatic surge of using root canal therapy as a means of retaining teeth which otherwise would have to be extracted. Problems of how best to strengthen the endodontically treated tooth to make it a viable component of the mouth are the factors limiting the use of root canal therapy. It is recognized to be a sound, preventive measure to reinforce endodontically treated teeth; and reinforcement is considered mandatory if these teeth are to be crowned or serve as abutments. Preventing fracture is less expensive than replacing a fractured tooth. A pulpless tooth becomes brittle, and use of threaded dowels often fractures the root. A precision fitting dowel has a tendency to exert lateral forces when it is cemented. These problems among others are described in the current literature, of which the following articles are representative:

1. "An endodontic-prosthodontic approach to internal tooth reinforcement"—Sapone and Lorencki—The Journal of Prosthetic Dentistry Vol. 45, No. 2, Feb. 1981, pages 164—174;
2. "In vitro analysis of self-shearing retentive pins"—Collard, Caputo, Standlee, and Duncanson—The Journal of Prosthetic Dentistry Vol. 45, No. 2, Feb. 1981, pages 156—159.

Known from FR—A—2,385,383 is a grommet thimble which can be used in preparing a root canal for endodontic reconstruction of the tooth. This grommet thimble comprises a tubular body of solid material, having an outer diameter greater than the diameter of the root canal and an axial length which is a fraction of the depth of said root canal for fitting into and lining an entrance hole of diameter greater than that of the root canal in the entrance portion thereof. The tubular body has an inner bore, the diameter of which is as large as the diameter of the root canal, thereby giving access to the root canal for purposes such as preparation and reconstruction. A support pin is insertable into the inner bore to provide support for a dental prosthesis.

However, such an arrangement is not devoid of inconveniences.

From the standpoint of endodontic practice, care must be exercised during mechanical instrumentation if showers of bacteria are not to be forced through the apical foramen. The root canal surface must be thoroughly sterilized and filled if toxic effect upon the periapical tissue is to be prevented. It is recognized that if the root canal surface is rendered sterile and the canal is well-filled repair of destroyed periapical bone will taken place, and the pulpless tooth need not be looked upon as a hazard to health. In order to maintain a sterile operating technique, the rubber dam is used. It is said to be the only sure safeguard against bacterial contamination from saliva. The currently known practice for using a rubber dam is to isolate the entire tooth containing the root canal to be treated, with attendant injury to surrounding gingiva during the placement of a clamp for the rubber dam.

The present invention provides solutions to both problems—that of preventing fracture or splitting roots containing the canal to be treated, and that of isolating that root canal from infection—with a new endodontic reconstruction system which is both therapeutic and atraumatic in use. In general the invention provides a grommet thimble for use in preparing a root canal of a tooth for endodontic reconstruction of said tooth, comprising a tubular body of solid material having an outer diameter greater than the diameter of said root canal and an axial length which is a small fraction of the depth of said root canal for fitting into and lining an entrance hole of diameter greater than that of the root canal in the entrance portion thereof, said tubular body having an inner bore the diameter of which is at least as large as the diameter of said root canal, said grommet thimble being characterized in that it comprises means at the end which remains outside said entrance hole when said grommet thimble is installed therein for retaining a sanitary dam having a perforation in register with said inner bore, so as to cover said tooth and the surrounding gingiva with said dam while giving access to said root canal through said perforation and said inner bore.

A combination of a grommet thimble and a reconstruction pin is claimed in the divisional application 87 107 384.7, published as EP—A—0 245 878.

The invention is further illustrated through a description of presently-preferred embodiments which follows.

Figure 1 shows a root canal in a tooth prepared to receive a grommet thimble in its entrance portion;

Figure 2 shows a tool useful to prepare the entrance portion of a root canal as is shown in Figure 1;

Figure 3 shows a grommet thimble fitted with retaining means for a sanitary dam;

Figure 4 shows another grommet thimble fitted with removable retaining means for a sanitary dam;

Figure 5 is a transverse section taken on line 5—5 of Figure 3;

Figure 6 is a sanitary dam clamp useable to place a dam on the grommet thimble according to Figure 3;

Figure 6A shows another sanitary dam clamp;

Figure 7 shows a grommet thimble according to Figure 3 installed in a root canal retaining a sanitary dam at the entrance to the root canal;

Figure 8 shows a reconstruction pin which can be used with the grommet thimble of Figure 4 according to the invention, as fitted with a transfer sleeve;

Figure 8A is a transverse section taken on line 8A—8A of Figure 8.

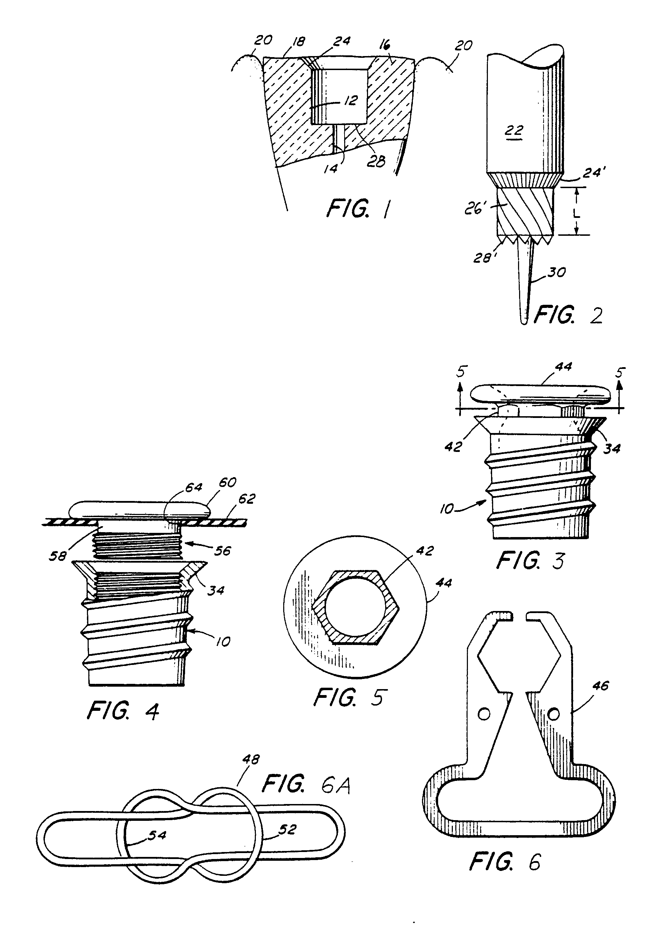

The grommet thimble is intended to be fitted into the entrance portion 12 of the root canal 14 which is shown in Figure 1. The tooth 16 has been smoothed off at the surface 18 essentially flush with the level of the surrounding gum tissue 20. The entrance portion 12 is bored out to a diameter wider than the root canal 14, using a special tool 22 such as is illustrated in Figure 2. With this tool a bevel 24 is formed at the outer margin of the entrance portion 12, using the bevel-grinder 24'. The main body 26' of the tool grinds the entrance portion 12 to the desired diameter. The bottom teeth 28' grind a shelf 28 at the bottom of the entrance portion. A smooth centering guide 30 of the tool fits in the canal 14 and centers the tool for preparing the wide opening in the entrance portion 12.

The grommet thimble 10 is a sleeve which lines the entrance bore 12. It is fitted with a flared band 34 at its outer end, for engaging the bevel 24 when the sleeve is fully seated in the entrance portion 12. The outer side surface of the sleeve may be fitted with self-tapping threads, so that the grommet thimble may be screwed into the entrance portion 12 of the root canal.

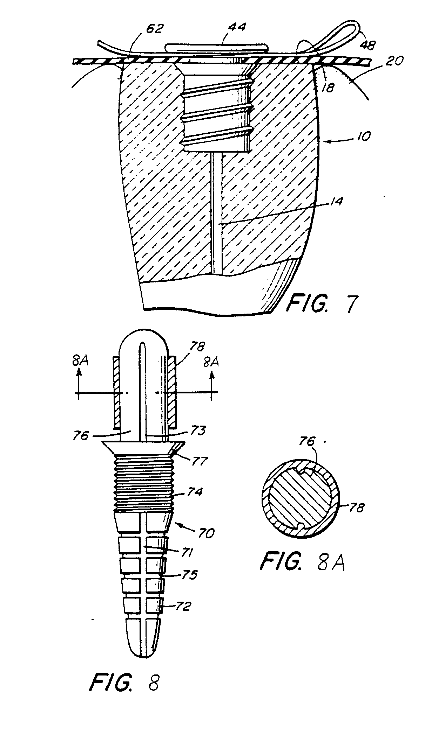

Figure 3 shows the grommet thimble 10 fitted at its outer periphery with a collar 42 and an outwardly flared ring 44 under which a sanitary dam 62 (shown in Figure 7) can be retained at the entrance to the root canal 14. The collar 42 has for example a hexagonal outer periphery, shown in Figure 5, for cooperating with a clamp 46 shown in Figure 6. Figure 6A shows another form of clamp 48 made of two U-shaped wire components 52, 54 cooperating in the manner of a square knot, which is adjustable to form a loop around the collar 42.

As is shown in Figure 4, the grommet thimble 10 can be internally threaded at its outer end, and a dam retainer 56 can be removably fitted to it. This retainer has a round collar 58 which can be threaded into the thimble-sleeve, and flared ring 60. A sanitary (e.g. rubber) dam 62 has a small perforation 64 through which the collar 58 is fitted and then screwed into the grommet thimble 10, retaining the dam between the flared end 34 and the flared ring 60.

As is shown in Figure 7, when a grommet thimble 10 with fixed retainer means 42, 44 according to Figure 3 is used, the dam 62 is slipped over the flared ring 44 and is held down on the tooth with a clamp such as the clamp 46 shown in Figure 6. In either case, Figure 7 or Figure 4, the dam 62 is held in place by retainer means fitted to the grommet thimble 10, and it isolates the root canal from the outer surface 18 of the tooth and from the surrounding tissue 20, without the need to isolate the entire tooth or to involve the surrounding gingiva in the clamping procedure. Once in place, the grommet thimble 10 protects the surrounding dentin mechanically. The root canal 14 can be prepared through it, and it can accommodate a removable seal or a cap (not shown) to function as a temporary plug for protecting the root canal from infection and maintaining asepsis of the canal during interruption of the reconstruction procedure. After the root canal has been prepared, the grommet thimble, or a substitute, can be used to retain or support a reconstruction post, or the like in place in the root canal.

Figures 8 and 8A show a reconstruction post 70 which can be used with the grommet thimble according to the invention. This post has an intra-coronal pin 72 for fitting inside the canal 14, an externally threaded support body 74 intended to be threaded into an internally-threaded grommet thimble 10 (as is shown in Figure 4 and described following), and an extra-coronal part 76 which is shown fitted with an optional transfer sleeve 78. Vent-grooves 71, 73 are fitted to the pin 70, as well as depth-gauge grooves 75. The support body 74 has a flared top seal 77, for seating on the flared band 34 of the grommet thimble 10 when the support body is fully threaded into the grommet thimble, and thereby sealing the opening to the root canal. The grommet thimble 10 has external self-tapping threads for engaging in the tooth dentin, like the grommet thimble 10 as shown in Figure 7. The internal threads engage the threads of the support body 74 of the pin 70, and in this manner the pin 70 is fastened into a root canal such as the canal 14 shown in Figure 7, and the opening into the canal is sealed with the top seal 77. A reconstruction can be built on the extra-coronal portion 76 in any desired fashion; the invention facilitates use of a transfer sleeve 78, if desired.

Grommet thimbles according to the invention can be made of any desired material.

The invention achieves its purposes with a grommet thimble incorporating a bore sleeve which is fitted with retainer means for a sanitary dam. When this thimble is fitted into the specially-prepared entrance portion of a root canal, the retainer means extends from the tooth for holding a dam of rubber or the like without injury to surrounding gingiva during placement of a clamp for the rubber dam. The root canal can be prepared with the sleeve and dam in place, the sleeve and dam serving to facilitate the establishment and maintenance of a sterile field of operation without creation of unnecessary lacerations on the surrounding gingiva. After completion of the desired preparation procedure, or of partial completion, a temporary plug can be removably fitted into the sleeve for protection of the work done or in process. For completion of a restoration several options are available. The retainer means can be left in place and used to anchor a core with or without a post. Alternatively a post can be fastened (e.g. screwed) into the sleeve, with or without keeping the retainer means.

**Claims**

1. A grommet thimble (10) for use in preparing a root canal (14) of a tooth (16) for endodontic reconstruction of said tooth, comprising a tubular body of solid material having an outer diameter greater than the diameter of said root canal (14) and an axial length which is a small fraction of the depth of said root canal for fitting into and lining an entrance hole of diameter greater than that of the root canal (14) in the entrance portion (12) thereof, said tubular body having an inner bore the diameter of which is at least as large as the diameter of said root canal (14), said grommet thimble being characterized in that it comprises means (42, 44; 56, 58, 60) at the end which remains outside said entrance hole when said grommet thimble (10) is installed therein for retaining a sanitary dam (62) having a perforation (64) in register with said inner bore, so as to cover said tooth (16) and the surrounding gingiva (20) with said dam (62) while giving access to said root canal (14) through said perforation (64) and said inner bore.

2. A grommet thimble (10) according to claim 1 characterized in that it has a substantially smooth inner bore.

3. A grommet thimble (10) according to claim 1 characterized in that it has a screw threaded inner bore, adapted for screw thread engagement with said means (56) for retaining said sanitary dam (62) having a perforation (64) in register with said inner bore.

4. A grommet thimble (10) according to claim 1 characterized in that it has a roughened surface on its inner bore.

5. A grommet thimble (10) according to one or more of the preceding claims characterized in that said means for retaining the sanitary dam (62) comprises a separable collar (58) threadedly engageable inside said inner bore at said end, for fitting through said perforation (64) of said dam (62) and, when threaded into said inner bore, retaining said dam (62) with said perforation (64) in register with said inner bore.

6. A grommet thimble (10) according to one or more of the preceding claims characterized in that said means for retaining the sanitary dam (62) comprises a flanged collar (42) fixed to said end for engaging in said perforation (64) when said sanitary dam (62) is fitted to said grommet thimble (10).

7. A grommet thimble (10) according to claim 1, 2, 3, 4, 5, or 6 characterized in that it further comprises screw threads at its outer tubular surface, for threadedly fixing said thimble (10) in said entrance hole.

8. A grommet thimble (10) according to one or more of the preceding claims, characterized in that said inner bore is adapted for engagement with a reconstruction pin (70).

9. A grommet thimble (10) according to claims 5 or 6 in combination with clamp means (46, 48, 52, 54) engageable under said collar (42, 58) for holding said sanitary dam (62) in a desired location.

10. A combination according to claim 9 characterized in that said clamp means (48) comprises a wire loop, and means (52, 54) to alter the size of said loop from a size capable of fitting over said collar (42, 58) to a fixable size tightly embracing said retaining means (56, 44) under said collar (58, 42) for holding said sanitary dam (62) in said desired location.

11. A combination according to claim 9 characterized in that said collar (42) has a substantially polygonal outer periphery, and in that said clamp means (46) are adapted for tightly embracing said outer periphery of said collar (42).

**Patentansprüche**

1. Einsatzstück (10) zür Verwendung bei der Bildung eines Wurzelkanals (14) eines Zahnes (16) für den Wiederaufbau des Zahnes im Zahninneren, bestehend aus einem rohrförmigen Körper aus festem Material, der einen Außendurchmesser, der größer ist als der Durchmesser des Wurzelkanals (14), und eine Axiallänge, die ein kleiner Bruchteil der Tiefe des Wurzelkanals ist, besitzt und der in ein Zugangsloch, das einen größeren Durchmesser als der des Wurzelkanals (14) im Eingangsabschnitt (12) desselben aufweist, eingepaßt wird und dieses auskleidet, welcher Rohrkörper eine Innenbohrung besitzt, deren Durchmesser zumindest ebenso groß ist wie der Durchmesser des Wurzelkanals (14), dadurch gekennzeichnet, daß es an dem Ende, welches, wenn das Einsatzstück (10) im genannten Zugangsloch montiert ist, außerhalb desselben verbleibt, Einrichtungen (42, 44; 56, 58, 60) aufweist, um einen Abdeckstreifen (62), der eine mit der Innenbohrung korrespondierende Perforation (64) besitzt, zu halten, um auf diese Weise den Zahn (16) und das umgebende Zahnfleisch (20) mit dem Abdeckstreifen (62) abzudecken und dabei den Würzelkanal (14) durch die Perforation (64) und die genannte Innenbohrung zugänglich zu machen.

2. Einsatzstück (10) nach Anspruch 1, dadurch gekennzeichnet, daß es eine im wesentlichen glatte Innenbohrung aufweist.

3. Einsatzstück (10) nach Anspruch 1, dadurch gekennzeichnet, daß es eine mit einem Schraubengewinde versehene Innenbohrung zum Einschrauben der Einrichtung (56) für die Halterung des Abdeckstreifens (62), der eine mit der Innenbohrung korrespondierende Perforation (64) besitzt, aufweist.

4. Einsatzstück (10) nach Anspruch 1, dadurch gekennzeichnet, daß es auf seiner Innenbohrung eine aufgerauhte Oberfläche besitzt.

5. Einsatzstück (10) nach einem der mehreren der vorhergehenden Ansprüche, dadurch gekennzeichnet, daß die Einrichtungen für die Halterung des Abdeckstreifens (62) aus einer abtrennbare Hülse (58) bestehen, die in die Innenbohrung am genannten Ende einschraubbar ist, um den Abdeckstreifen (62) durch die Perforation (64) anzubringen und, nach Einschrauben in die Innenbohrung den Abdeckstreifen (62) mit der mit der Innenbohrung korrespondierenden Perforation (64) zu halten.

6. Einsatzstück (10) nach einem oder mehreren der vorhergehenden Ansprüche, dadurch gekennzeichnet, daß die Einrichtung zur Halterung des Abdeckstreifens (62) aus einer angeflanschten Hülse (42) besteht, der an dem genannten Ende vorgesehen ist, um an der Perforation (64) anzugreifen, wenn der Abdeckstreifen (62) am Einsatzstück (10) angebracht ist.

7. Einsatzstück (10) nach Anspruch 1, 2, 3, 4, 5 oder 6, dadurch gekennzeichnet, daß es weiters ein Schraubengewinde an seiner äußeren Rohrfläche besitzt, um das Einsatzstück (10) durch Einschrauben im Zugangsloch zu befestigen.

8. Einsatzstück (10) nach einem oder mehreren der vorhergehenden Ansprüche, dadurch gekennzeichnet, daß die Innenbohrung zum Eingriff mit einem Aufbaustift (70) ausgebildet ist.

9. Einsatzstück nach Anspruch 5 oder 6, in Kombination mit Klammern (46, 48, 52, 54), die unter der Hülse (42, 58) anbringbar sind, um den Abdeckstreifen (62) in einer gewünschten Lage zu halten.

10. Kombination nach Anspruch 9, dadurch gekennzeichnet, daß die Klammern (48) aus Drahtschlaufen und Einrichtungen (52, 54) zur Veränderung der Größe der Schlaufe von einer solchen Größe, die ein Aufbringen über die Hülse (42, 58) gestattet, bis zu einer fixierbaren Größe, bei welcher die Halterungseinrichtungen (56, 44) unter der Hülse (58, 42) zur Halterung des Abdeckstreifens (62) in der genannten gewünschten Stellung eng umfaßt werden, bestehen.

11. Kombination nach Anspruch 9, dadurch gekennzeichnet, daß die Hülse (42) einen im wesentlichen vieleckigen Umfang besitzt und daß die genannten Klammern (46) derart ausgebildet sind, daß sie dem Umfang der Einschnürung (42) eng umfassen.

**Revendications**

1. Bague de virole (10), à utiliser pour préparer un canal de racine (14) d'une dent (16) pour la reconstruction endodontique de ladite dent, comprenant un corps tubulaire en matériau massif ayant un diamètre extérieur supérieur au diamètre du dit canal de racine (14) et une longueur axiale qui est une faible fraction de la profondeur du dit canal de racine destiné à être ajusté dans un trou d'entrée de diamètre supérieur à celui du canal de racine (14) et à garnir celui-ci dans sa partie d'entrée (12), ledit corps tubulaire ayant un alésage intérieur dont le diamètre est au moins aussi grand que le diamètre du dit canal de racine (14), ladite bague de virole étant caractérisée en ce qu'elle comprend des éléments (42, 44, 56, 58, 60) à l'extrémité qui reste en dehors du dit trou d'entrée lorsque ladite bague de virole (10) y est placée pour retenir un écran sanitaire (62) présentant une perforation (64) qui correspond au dit alésage intérieur de façon à recouvrir ladite dent (16) et la gencive avoisinante (20) avec ledit écran (62), tout en donnant accès au dit canal de dent (14) par ladite perforation (64) et ladite alésage intérieur.

2. Bague de virole (10) selon la revendication 1, caractérisée en ce qu'elle présente un alésage intérieur essentiellement lisse.

3. Bague de virole (10) selon la revendication 1, caractérisée en ce qu'elle présente un alésage intérieur fileté, adapté pour permettre le vissage du dit moyen (56) afin de retenir ledit écran sanitaire (62) ayant une perforation (64) correspondant au dit alésage intérieur.

4. Bague de virole (10) selon la revendication 1, caractérisée en ce qu'elle possède un alésage intérieur à surface rugueuse.

5. Bague de virole (10) selon une ou plusieurs des revendications précédentes, caractérisée en ce que ledit élément pour retenir l'écran sanitaire (62) comprend un collet amovible (58) pouvant se fixer par vissage dans ledit alésage intérieur à ladite extrémité, afin de s'adapter à travers ladite perforation (64) du dit écran (62) et pour retenir ledit écran (62) avec ladite perforation (64) correspondant au dit alésage intérieur après vissage dans ledit alésage intérieur.

6. Bague de virole (10) selon une ou plusieurs des revendications précédentes, caractérisée en ce que l'élément pour retenir l'écran sanitaire (62) comprend un collet à bride (42) fixé à ladite extrémité pour s'engager dans ladite perforation (64) quand ledit écrant sanitaire (62) est adapté à ladite bague de virole (10).

7. Bague de virole (10) selon les revendications 1, 2, 3, 4, 5 ou 6, caractérisée en ce qu'elle comprend en outre à sa surface tubulaire extérieure un filetage permettant de fixer par vissage ladite bague (10) dans ledit trou d'entrée.

8. Bague de virole (10) selon une ou plusieurs des revendications précédentes, caractérisée en ce que ledit alésage intérieur est conçu pour s'adapter à une broche de reconstruction (70).

9. Bague de virole (10) selon la revendication 5 ou 6, combinée à un dispositif de serrage (46, 48, 52, 54) pouvant s'engager en dessous du dit collet (42, 58) afin de maintenir ledit écran sanitaire (62) à l'emplacement souhaité.

10. Combinaison, selon la revendication 9, caractérisée en ce que ledit dispositif de serrage (48) comprend une boucle de fil et un élément (52, 54) permettant de modifier la dimension de ladite boucle, depuis une dimension permettant l'adaptation par-dessus ledit collet (42, 58) jusqu'à une dimension pouvant être rendue définitive et permettant de serrer étroitement ledit élément de fixation (56, 44) en dessous du dit collet (58, 52) afin de maintenir ledit écran sanitaire (62) à l'emplacement souhaité.

11. Combinaison selon la revendication 9, caractérisée en ce que ledit collet (42) a une périphérie extérieure essentiellement polygonale et en ce que lesdits éléments de serrage (46) sont conçus pour serrer étroitement ladite périphérie extérieure du dit collet (42).

FIG. 1

FIG. 2

FIG. 3

FIG. 4

FIG. 5

FIG. 6

FIG. 6A

FIG. 7

FIG. 8

FIG. 8A